# EUROPÄISCHE PATENTSCHRIFT

(11) **EP 3 489 922 B1**
(45) Veröffentlichungstag und Bekanntmachung des Hinweises auf die Patenterteilung: **05.01.2022**
(21) Anmeldenummer: 17203567.7
(22) Anmeldetag: 24.11.2017
(51) Int. Cl.: G08C 17/02, A47L 7/00, B23Q 11/00, A47L 9/28

(54) **VERFAHREN ZUM BETREIBEN EINES DRAHTLOSEN SENDERS UND EINES DRAHTLOSEN EMPFÄNGERS UND SYSTEM**
METHOD OF OPERATING A WIRELESS TRANSMITTER AND A WIRELESS RECEIVER AND SYSTEM
PROCÉDÉ DE FONCTIONNEMENT D'UN ÉMETTEUR SANS FIL ET D'UN RÉCEPTEUR SANS FIL ET SYSTÈME

(43) Veröffentlichungstag der Anmeldung: 29.05.2019
(73) Patentinhaber: Andreas Stihl AG & Co. KG, 71336 Waiblingen (DE)
(72) Erfinder: Ruß, Patrick, 70619 Stuttgart (DE); Roitsch, Tommy, 71334 Waiblingen (DE)
(74) Vertreter: Patentanwälte Ruff, Wilhelm, Beier, Dauster & Partner mbB

(56) Entgegenhaltungen:
- WO-A1-2018/162233
- DE-A1-102012 003 073
- US-A1- 2010 199 453
- US-A1- 2017 090 499

## Beschreibung

### ANWENDUNGSGEBIET UND STAND DER TECHNIK

Die Erfindung bezieht sich auf ein Verfahren zum Betreiben eines drahtlosen Senders und eines drahtlosen Empfängers und ein System.

Ein Verfahren zum Betreiben eines drahtlosen Senders und eines drahtlosen Empfängers und ein System sind bekannt.

Insbesondere offenbart die US 2010/0199453 A1 ein drahtloses Teilchensammelsystem mit einem Staubsammler und mindestens ein mit dem Staubsammler gekoppeltes Elektrowerkzeug. Dem Elektrowerkzeug ist eine eindeutige Kennung zugeordnet, die in einem drahtlosen Signal enthalten ist, das bei einer Aktivierung des Elektrowerkzeugs gesendet wird. Die eindeutige Kennung wird vom Staubsammler erkannt, der sich bei einem Empfang des drahtlosen Signals aktiviert oder deaktiviert.

Des Weiteren offenbart die DE 10 2012 003 073 A1 ein Sauggerät mit einer Sauggerät-Kommunikationseinrichtung.

Außerdem offenbart die WO 2018/162233 A1 ein Verfahren zu einem Betrieb eines Systems mit zumindest einem, insbesondere abnehmbar an einer Werkzeugmaschine anordenbaren, Werkzeugfunktionsmodul und mit zumindest einem Werkzeugzubehörgerät, wobei das Werkzeugfunktionsmodul und das Werkzeugzubehörgerät jeweils zumindest eine drahtlose Kommunikationseinheit umfassen. Es wird vorgeschlagen, dass in zumindest einem Verfahrensschritt, in Abhängigkeit von einer Übertragung von elektronischen Daten mittels der drahtlosen Kommunikationseinheiten, dem Werkzeugfunktionsmodul eine Masterfunktion zugeordnet wird und dem zumindest einen Werkzeugzubehörgerät eine, insbesondere der Masterfunktion untergeordnete, Slavefunktion zugeordnet wird.

### AUFGABE UND LÖSUNG

Der Erfindung liegt als Aufgabe die Bereitstellung eines Verfahrens zum Betreiben eines drahtlosen Senders und eines drahtlosen Empfängers und eines Systems zugrunde, das jeweils verbesserte Eigenschaften aufweist, insbesondere kostengünstig und benutzerfreundlich ist.

Die Erfindung löst diese Aufgabe durch die Bereitstellung eines Verfahrens mit den Merkmalen des Anspruchs 1 und eines Systems mit den Merkmalen des Anspruchs 7. Vorteilhafte Weiterbildungen und/oder Ausgestaltungen der Erfindung sind in den abhängigen Ansprüchen beschrieben.

Das erfindungsgemäße Verfahren ist zum Betreiben eines drahtlosen Senders und eines drahtlosen Empfängers ausgebildet. Der drahtlose Sender ist einem Werkzeug zugeordnet und dazu geeignet, einen Betriebszustand des Werkzeugs, insbesondere automatisch, zu erfassen und in Abhängigkeit von dem erfassten Betriebszustand ein Betriebszustandssignal, insbesondere automatisch, zu senden. Der drahtlose Empfänger ist einem Gerät zugeordnet und dazu geeignet, das gesendete Betriebszustandssignal, insbesondere automatisch, zu empfangen und in Abhängigkeit von dem empfangenen Betriebszustandssignal einen Betriebszustand des Geräts, insbesondere automatisch, zu steuern. Das Verfahren weist den Schritt auf: Zuordnen des drahtlosen Senders und des drahtlosen Empfängers mittels eines benutzerbetätigbaren, elektrischen Zuordnungsgeräts derart, dass der Empfänger in Abhängigkeit von dem empfangenen Betriebszustandssignal den Betriebszustand des Geräts steuert. Das Zuordnungsgerät ist getrennt von dem Sender und dem Empfänger ausgebildet. Der drahtlose Sender weist eine Senderidentifikation auf und ist dazu geeignet, die Senderidentifikation zu senden, insbesondere zusammen mit dem Betriebszustandssignal. Beim Zuordnen wird die Senderidentifikation dem drahtlosen Empfänger mittels des benutzerbetätigbaren, elektrischen Zuordnungsgeräts zugeordnet. Zusätzlich oder alternativ weist der drahtlose Empfänger eine Empfängeridentifikation auf. Der drahtlose Sender ist dazu geeignet, die Empfängeridentifikation zu senden, insbesondere zusammen mit dem Betriebszustandssignal. Beim Zuordnen wird die Empfängeridentifikation dem drahtlosen Sender mittels des benutzerbetätigbaren, elektrischen Zuordnungsgeräts zugeordnet. Das benutzerbetätigbare, elektrische Zuordnungsgerät ist dazu ausgebildet, die gesendete/n Senderidentifikation/en und die gesendete/n Empfängeridentifikation/en zu empfangen. Mittels des Zuordnungsgeräts kann ein Benutzer die Senderidentifikation/en der entsprechenden Empfängeridentifikation zuordnen. Infolgedessen sendet das benutzerbetätigbare, elektrische Zuordnungsgerät ein Konfigurationssignal.

Das Verfahren ermöglicht ein kostengünstiges Zuordnen. Der drahtlose Sender und der drahtlose Empfänger brauchen kein benutzerbetätigbares, elektrisches Zuordnungsgerät zum Zuordnen aufzuweisen. Insbesondere können mittels des, insbesondere einzigen, Zuordnungsgeräts nicht nur der Sender und der Empfänger, sondern auch mindestens ein weiterer Sender und/oder mindestens ein weiterer Empfänger jeweils zugeordnet werden. Des Weiteren ermöglicht das Verfahren ein benutzerfreundliches Zuordnen mittels des Zuordnungsgeräts.

Wenn der drahtlose Sender und der drahtlose Empfänger zugeordnet sind, kann der Sender dazu ausgebildet sein, den Betriebszustand des Werkzeugs zu erfassen und in Abhängigkeit von dem erfassten Betriebszustand das Betriebszustandssignal zu senden. Zusätzlich oder alternativ kann der Empfänger dazu ausgebildet sein, das gesendete Betriebszustandssignal zu empfangen und in Abhängigkeit von dem empfangenen Betriebszustandssignal den Betriebszustand des Geräts zu steuern. In anderen Worten: wenn der Sender und der Empfänger zugeordnet sind, kann der Betriebszustand des Werkzeugs den Betriebszustand des Geräts steuern. Anders formuliert: wenn der Sender und der Empfänger zugeordnet sind, kann der Betriebszustand des Geräts von dem Betriebszustand des Werkzeugs abhängig sein. Wenn hingegen der Sender und der Empfänger nicht zugeordnet sind, kann der Betriebszustand des Geräts von dem Betriebszustand des Werkzeugs unabhängig sein. In anderen Worten: wenn der Sender und der Empfänger nicht zugeordnet sind, braucht der Empfänger, insbesondere unabhängig von einem Empfangen des Betriebszustandssignals, den Betriebszustand des Geräts nicht zu steuern. Das Zuordnen kann als Gruppieren oder Koppeln bezeichnet werden. Das Zuordnungsgerät kann als Gruppierungsgerät oder Kopplungsgerät oder Bediengerät bezeichnet werden.

Dem drahtlosen Sender kann eine Mehrzahl von drahtlosen Empfängern zugeordnet werden oder sein, insbesondere von mindestens zwei, insbesondere mindestens fünf, insbesondere mindestens zehn. Zusätzlich oder alternativ kann dem drahtlosen Empfänger eine Mehrzahl von drahtlosen Sendern zugeordnet werden oder sein, insbesondere von mindestens zwei, insbesondere mindestens fünf, insbesondere mindestens zehn.

Drahtloser Sender kann bedeuten, dass das Betriebszustandssignal drahtlos oder kabellos gesendet werden kann. Drahtloser Empfänger kann bedeuten, dass das Betriebszustandssignal drahtlos empfangen werden kann.

Getrennt von dem Sender und dem Empfänger ausgebildet kann bedeuten, dass das benutzerbetätigbare, elektrische Zuordnungsgerät unabhängig und/oder eigenständig ausgebildet sein kann. Insbesondere kann das Zuordnungsgerät getrennt von dem Werkzeug und/oder dem Gerät ausgebildet sein.

Das Werkzeug kann ein benutzerbetätigbares und/oder handgeführtes, insbesondere handgetragenes, Werkzeug sein. Das Werkzeug kann ein Garten- und/oder Forstbearbeitungsgerät sein. Das Werkzeug kann ein Handwerkszeug oder eine Baumaschine oder eine Maschine für einen Handwerker sein.

Das Gerät kann von dem Werkzeug verschieden beziehungsweise getrennt ausgebildet sein. Insbesondere kann das Gerät ein anderer Typ beziehungsweise eine andere Bauart als das Werkzeug sein beziehungsweise aufweisen. Das Gerät kann ein Hilfsgerät sein. Insbesondere kann das Gerät dazu ausgebildet sein, eine von dem Werkzeug verschiedene Aufgabe, insbesondere eine Hilfsaufgabe, auszuführen. Das Gerät kann ein handgeführtes, insbesondere handgetragenes, Gerät sein.

Der drahtlose Sender kann das Betriebszustandssignal unmittelbar oder mittelbar, insbesondere mittels des benutzerbetätigbaren, elektrischen Zuordnungsgeräts, senden. Der drahtlose Empfänger kann das Betriebszustandssignal unmittelbar oder mittelbar, insbesondere mittels des Zuordnungsgeräts, empfangen.

Das Betriebszustandssignal kann ein betriebszustandsspezifisches Signal sein und/oder den erfassten Betriebszustand des Werkzeugs beschreiben oder charakterisieren.

Dies ermöglicht, insbesondere die Senderidentifikation und/oder die Empfängeridentifikation ermöglichen/ermöglicht, den Sender von einem weiteren, insbesondere nicht zugeordneten, Sender und/oder den Empfänger von einem weiteren, insbesondere nicht zugeordneten, Empfänger zu unterscheiden. Insbesondere können/kann die Senderidentifikation und/oder die Empfängeridentifikation jeweils individuell beziehungsweise eindeutig, insbesondere einmalig, sein. Das Zuordnen kann durch ein Speichern der Senderidentifikation im Empfänger und/oder im Zuordnungsgerät und/oder durch ein Speichern der Empfängeridentifikation im Sender und/oder im Zuordnungsgerät erfolgen.

In einer Weiterbildung der Erfindung ist das benutzerbetätigbare, elektrische Zuordnungsgerät eine Smartwatch oder ein Smartphone oder ein Tablet oder ein Laptop oder ein Computer. Typischerweise weist eine Smartwatch oder ein Smartphone oder ein Tablet oder ein Laptop oder ein Computer eine benutzerfreundlich gestaltete Ausgabeeinrichtung, insbesondere ein Display, und/oder eine benutzerfreundlich gestaltete Eingabeeinrichtung, insbesondere eine Tastatur und/oder eine Maus, und/oder eine benutzerfreundlich gestaltete kombinierte Ausgabe-/Eingabeeinrichtung auf, insbesondere einen Touchscreen. Somit ermöglicht das Zuordnungsgerät ein besonders benutzerfreundliches Zuordnen.

In einer Weiterbildung der Erfindung ist das benutzerbetätigbare, elektrische Zuordnungsgerät ein drahtloses Zuordnungsgerät und dazu ausgebildet, den drahtlosen Sender und den drahtlosen Empfänger drahtlos zuzuordnen. Das Zuordnen ist ein drahtloses Zuordnen. Dies ermöglicht ein besonders benutzerfreundliches Zuordnen. Insbesondere braucht keine Drahtverbindung zum Zuordnen hergestellt zu werden. Drahtloses Zuordnungsgerät kann bedeuten, dass das Zuordnungsgerät dazu ausgebildet sein kann, drahtlos zu senden und/oder drahtlos zu empfangen. Typischerweise kann die Smartwatch oder das Smartphone oder das Tablet oder der Laptop oder der Computer, soweit vorhanden, das drahtlose Zuordnungsgerät sein.

In einer Weiterbildung der Erfindung ist der Betriebszustand des Werkzeugs ein Einschaltzustand, insbesondere ein Regelungszustand, oder ein Ausschaltzustand. Zusätzlich oder alternativ ist der Betriebszustand des Geräts ein Einschaltzustand, insbesondere ein Regelungszustand, oder ein Ausschaltzustand. Der Regelungszustand des Werkzeugs kann ein Energieverbrauchsregelungszustand beziehungsweise ein Energieaufnahmeregelungszustand und/oder ein Drehzahlregelungszustand sein. Der Regelungszustand des Geräts kann ein Energieverbrauchsregelungszustand und/oder ein Drehzahlregelungszustand sein. Das Betriebszustandssignal kann den Einschaltzustand oder den Ausschaltzustand des Werkzeugs aufweisen. Anders formuliert: das Betriebszustandssignal kann für den Einschaltzustand und für den Ausschaltzustand verschieden sein. Alternativ kann der drahtlose Sender dazu ausgebildet sein, beim Einschaltzustand des Werkzeugs das Betriebszustandssignal zu senden und beim Ausschaltzustand kein Betriebszustandssignal zu senden.

In einer Weiterbildung der Erfindung ist das Werkzeug eine Schleifmaschine oder ein Trennschleifer oder ein Winkelschleifer oder eine Säge oder eine Kreissäge oder eine Stichsäge oder ein Hoch-Entaster oder eine Heckenschere oder ein Heckenschneider oder ein Blasgerät oder ein Laubbläser oder ein Rasenmäher oder ein Freischneider oder ein Kehrgerät oder eine Kehrwalze oder eine Kehrbürste oder eine Bohrmaschine oder eine Schlagbohrmaschine oder eine Fräsmaschine oder eine Hobelmaschine oder eine Poliermaschine. Während des Betriebs eines solchen Werkzeugs kann dieses Abfall und/oder Dreck, insbesondere Staub, Sägespäne, Laub und/oder Gras, erzeugen und/oder aufwirbeln. Zusätzlich oder alternativ kann ein solches Werkzeug während seines Betriebs Verbrauchsstoff, insbesondere Schmieröl, verbrauchen und/oder sich erwärmen.

In einer Weiterbildung der Erfindung ist das Gerät ein Sauger und/oder eine Schmiermittel- und/oder Kühlmittelfördereinrichtung und/oder eine Mediumfördereinrichtung und/oder ein Ventil. Insbesondere kann der Sauger ein Staub- und/oder Laubsauger sein. Die Schmiermittel- und/oder Kühlmittelfördereinrichtung kann eine Ölfördereinrichtung und/oder eine Wasserfördereinrichtung sein. Die Mediumfördereinrichtung kann dazu ausgebildet sein, dem Werkzeug ein Medium, insbesondere Wasser, zum Binden zuzuführen, insbesondere von Staub. Die Mediumfördereinrichtung kann als Bindemittelfördereinrichtung bezeichnet werden. Das Ventil kann dazu ausgebildet sein, einen Fluss eines Mediums, insbesondere Wasser oder Gas, insbesondere Druckluft, oder Hydraulikflüssigkeit, freizugeben oder abzusperren, insbesondere zu regeln. Das Ventil kann ein Magnetventil sein.

Des Weiteren bezieht sich die Erfindung auf ein System. Das erfindungsgemäße System weist den drahtlosen Sender auf, der dazu geeignet ist, dem Werkzeug zugeordnet zu sein und den Betriebszustand des Werkzeugs zu erfassen und in Abhängigkeit von dem erfassten Betriebszustand das Betriebszustandssignal zu senden. Außerdem weist das System den drahtlosen Empfänger auf, der dazu geeignet ist, dem Gerät zugeordnet zu sein und das gesendete Betriebszustandssignal zu empfangen und in Abhängigkeit von dem empfangenen Betriebszustandssignal den Betriebszustand des Geräts zu steuern. Der drahtlose Sender und der drahtlose Empfänger sind dazu ausgebildet, mittels des benutzerbetätigbaren, elektrischen Zuordnungsgeräts derart zugeordnet zu sein oder zu werden, dass der Empfänger in Abhängigkeit von dem empfangenen Betriebszustandssignal den Betriebszustand des Geräts steuert. Das Zuordnungsgerät ist getrennt von dem Sender und dem Empfänger ausgebildet. Der drahtlose Sender weist eine Senderidentifikation auf und ist dazu geeignet, die Senderidentifikation zu senden, insbesondere zusammen mit dem Betriebszustandssignal. Beim Zuordnen wird die Senderidentifikation dem drahtlosen Empfänger mittels des benutzerbetätigbaren, elektrischen Zuordnungsgeräts zugeordnet. Zusätzlich oder alternativ weist der drahtlose Empfänger eine Empfängeridentifikation auf. Der drahtlose Sender ist dazu geeignet, die Empfängeridentifikation zu senden, insbesondere zusammen mit dem Betriebszustandssignal. Beim Zuordnen wird die Empfängeridentifikation dem drahtlosen Sender mittels des benutzerbetätigbaren, elektrischen Zuordnungsgeräts zugeordnet. Das benutzerbetätigbare, elektrische Zuordnungsgerät ist dazu ausgebildet, die gesendete/n Senderidentifikation/en und die gesendete/n Empfängeridentifikation/en zu empfangen. Mittels des Zuordnungsgeräts kann ein Benutzer die Senderidentifikation/en der entsprechenden Empfängeridentifikation zuordnen. Infolgedessen sendet das benutzerbetätigbare, elektrische Zuordnungsgerät ein Konfigurationssignal. Das System weist das benutzerbetätigbare, elektrische Zuordnungsgerät auf.

Das System kann die gleichen Vorteile ermöglichen wie das zuvor beschriebene Verfahren.

In einer Weiterbildung der Erfindung ist der drahtlose Sender ein Funksender und der drahtlose Empfänger ist ein Funkempfänger. Zusätzlich kann das benutzerbetätigbare, elektrische Zuordnungsgerät ein Funkgerät sein. Insbesondere können/kann der Funksender und/oder das Funkgerät zum Senden eines Funksignals ausgebildet sein. Der Funkempfänger und/oder das Funkgerät können/kann zum Empfangen eines Funksignals ausgebildet sein. Das Funksignal kann ein Bluetooth-Funksignal oder ein WLAN- beziehungsweise WIFI-Funksignal sein.

In einer Weiterbildung der Erfindung ist der drahtlose Sender getrennt von dem Werkzeug ausgebildet und mit dem Werkzeug, insbesondere mechanisch, koppelbar. Zusätzlich oder alternativ ist der drahtlose Empfänger getrennt von dem Gerät ausgebildet und mit dem Gerät, insbesondere mechanisch, koppelbar. Dies ermöglicht ein Nachrüsten an ein bestehendes Werkzeug und/oder an ein bestehendes Gerät. Insbesondere kann mittels einer Formschlussverbindung wie einer Schraubenverbindung oder einer Rastverbindung und/oder einer Kraftschlussverbindung und/oder einer Stoffschlussverbindung wie einer Klebeverbindung gekoppelt werden oder sein. Alternativ kann der Sender in das Werkzeug integriert sein, insbesondere ab Werk. Weiter alternativ kann der Empfänger in das Gerät integriert sein, insbesondere ab Werk.

In einer Weiterbildung der Erfindung weist der drahtlose Sender einen Sensor auf. Der Sensor ist dazu ausgebildet, unabhängig davon, ob das Werkzeug mittels eines Elektromotors oder eines Verbrennungsmotors angetrieben ist, den Betriebszustand des Werkzeugs zu erfassen. Insbesondere kann der Sensor dazu ausgebildet sein, einen Betriebszustand des Motors und somit den Betriebszustand des Werkzeugs zu erfassen.

In einer Weiterbildung der Erfindung weist der Sender einen Sensor in Form eines akustischen Sensors oder in Form eines induktiven Sensors oder in Form eines Vibrationssensors oder in Form eines Beschleunigungssensors zum Erfassen des Betriebszustands des Werkzeugs aufweist. Mittels des akustischen Sensors können Geräusche erfasst werden, welche typischerweise im Betrieb des Werkzeugs entstehen. Mittels des induktiven Sensors können sich ändernde elektromagnetische und/oder magnetische Felder erfasst werden, welche typischerweise im Betrieb des Werkzeugs durch Streufelder des Elektromotors, Zündimpulse des Verbrennungsmotors, Stromänderungen, sich bewegende Magnete in einem Schwungrad des Werkzeugs, eines Generators, soweit vorhanden, erzeugt werden. Mittels des Vibrationssensors oder des Beschleunigungssensors können Vibrationen erfasst werden, welche typischerweise im Betrieb des Werkzeugs entstehen. Somit kann der Betriebszustand erfasst werden, insbesondere unabhängig von einem das Werkzeug antreibenden Antriebsmotortyp.

In einer Weiterbildung der Erfindung ist der drahtlose Empfänger ein Adapter. Der Adapter ist zum Anordnen zwischen dem Gerät und einer Versorgungseinrichtung für das Gerät ausgebildet ist. Des Weiteren ist der Adapter dazu ausgebildet, eine Versorgungszufuhr von der Versorgungseinrichtung zum Steuern des Betriebszustands des Geräts zu steuern oder zu regeln. Die Versorgungseinrichtung kann eine elektrische Energiequelle sein, insbesondere eine Steckdose. Der Adapter kann als Steckdosenadapter bezeichnet werden. Die Versorgungseinrichtung kann eine Flüssigkeitsquelle sein, insbesondere ein Wasseranschluss. Der Adapter kann als Wasseranschlussadapter bezeichnet werden. Die Versorgungseinrichtung kann eine Gasquelle sein, insbesondere ein Druckluftanschluss. Der Adapter kann als Druckluftanschlussadapter bezeichnet werden. Die Versorgungseinrichtung kann eine Hydraulikquelle sein, insbesondere ein Hydraulikanschluss. Der Adapter kann als Hydraulikanschlussadapter bezeichnet werden.

In einer Weiterbildung der Erfindung weist das System das Werkzeug und/oder das Gerät auf. Insbesondere können/kann das Werkzeug und/oder das Gerät jeweils teilweise oder sogar ganz ausgebildet sein, wie für das Verfahren zuvor beschrieben.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: ein erfindungsgemäßes System zum Ausführen eines erfindungsgemäßen Verfahrens und
- Fig. 2: das System der Fig. 1 mit einem weiteren Sender und einem weiteren Empfänger.

### DETAILLIERTE BESCHREIBUNG DER AUSFÜHRUNGSBEISPIELE

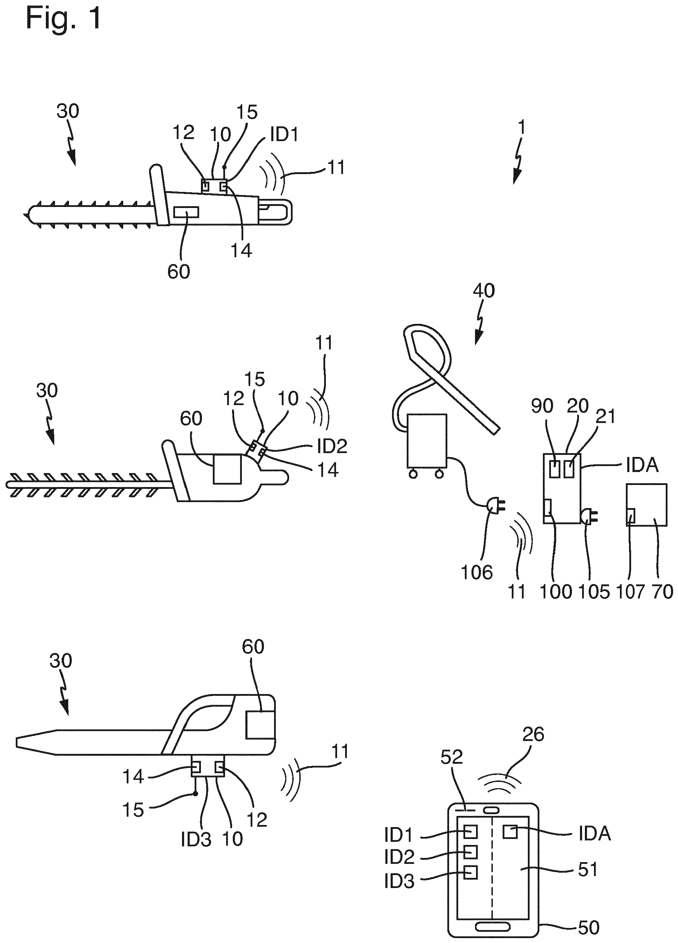

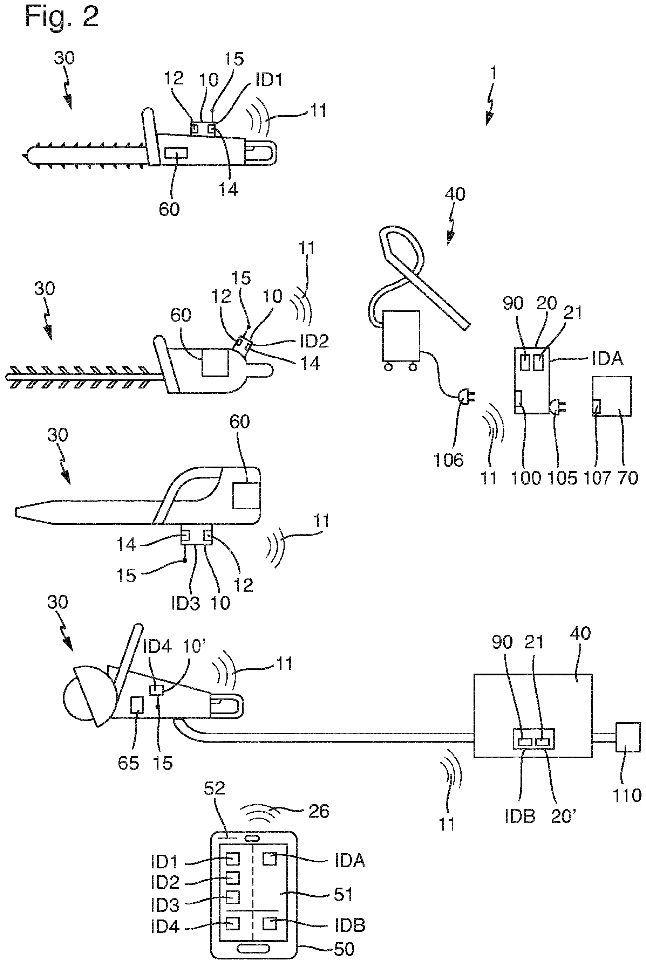

Fig. 1 und 2 zeigen ein erfindungsgemäßes System 1. Das System 1 weist einen drahtlosen Sender 10, 10' auf, der dazu geeignet ist, einem Werkzeug 30 zugeordnet zu sein und einen Betriebszustand des Werkzeugs 30 zu erfassen und in Abhängigkeit von dem erfassten Betriebszustand ein Betriebszustandssignal 11 zu senden. Des Weiteren weist das System 1 einen drahtlosen Empfänger 20, 20' auf, der dazu geeignet ist, einem Gerät 40 zugeordnet zu sein und das gesendete Betriebszustandssignal 11 zu empfangen und in Abhängigkeit von dem empfangenen Betriebszustandssignal 11 einen Betriebszustand des Geräts 40 zu steuern. Der drahtlose Sender 10, 10' und der drahtlose Empfänger 20, 20' sind dazu ausgebildet, mittels eines benutzerbetätigbaren, elektrischen Zuordnungsgeräts 50 derart zugeordnet zu sein oder zu werden, dass der Empfänger 20, 20' in Abhängigkeit von dem empfangenen Betriebszustandssignal 11 den Betriebszustand des Geräts 40 steuert. Das Zuordnungsgerät 50 ist getrennt von dem Sender 10, 10' und dem Empfänger 20, 20' ausgebildet.

Im gezeigten Ausführungsbeispiel weist das System 1 das benutzerbetätigbare, elektrische Zuordnungsgerät 50 auf.

Des Weiteren weist im gezeigten Ausführungsbeispiel das System 1 das Werkzeug 30 und das Gerät 40 auf.

Das System 1 ist zum Ausführen eines erfindungsgemäßen Verfahrens ausgebildet.

Das erfindungsgemäße Verfahren ist zum Betreiben des drahtlosen Senders 10, 10' und des drahtlosen Empfängers 20, 20' ausgebildet. Der drahtlose Sender 10, 10' ist dem Werkzeug 30 zugeordnet und dazu geeignet, den Betriebszustand des Werkzeugs 30 zu erfassen und in Abhängigkeit von dem erfassten Betriebszustand ein Betriebszustandssignal 11 zu senden. Der drahtlose Empfänger 20, 20' ist dem Gerät 40 zugeordnet und dazu geeignet, das gesendete Betriebszustandssignal 11 zu empfangen und in Abhängigkeit von dem empfangenen Betriebszustandssignal 11 den Betriebszustand des Geräts 40 zu steuern. Das Verfahren weist den Schritt auf: Zuordnen des drahtlosen Senders 10, 10' und des drahtlosen Empfängers 20, 20' mittels des benutzerbetätigbaren, elektrischen Zuordnungsgeräts 50 derart, dass der Empfänger 20, 20' in Abhängigkeit von dem empfangenen Betriebszustandssignal 11 den Betriebszustand des Geräts 40 steuert. Das Zuordnungsgerät 50 ist getrennt von dem Sender 10, 10' und dem Empfänger 20, 20' ausgebildet.

In der Fig. 1 weist das System 1 drei Sender 10 und einen Empfänger 20 auf. Des Weiteren weist das System 1 drei Werkzeuge 30 in Form einer Säge, insbesondere einer Kettensäge, einer Heckenschere und eines Blasgeräts und das eine Gerät 40 in Form eines Saugers auf. In Fig. 2 weist das System 1 zusätzlich einen weiteren Sender 10' und einen weiteren Empfänger 20' auf. Zusätzlich weist das System 1 ein weiteres Werkzeug 30 in Form eines Trennschleifers und ein weiteres Gerät 40 in Form eines Ventils auf. Mittels des, insbesondere einzigen, Zuordnungsgeräts 50 können die mehreren Sender 10, 10' und die mehreren Empfänger 20, 20' zugeordnet werden.

Im Detail ist das benutzerbetätigbare, elektrische Zuordnungsgerät 50 ein drahtloses Zuordnungsgerät in Form eines Smartphones mit einem Touchscreen 51. Das drahtlose Zuordnungsgerät 50 ist dazu ausgebildet, den beziehungsweise die drahtlosen Sender 10, 10' und den beziehungsweise die drahtlosen Empfänger 20, **20**' drahtlos zuzuordnen. Das Zuordnen ist ein drahtloses Zuordnen.

Der drahtlose Sender 10, 10' ist ein Funksender in Form eines Bluetooth-Funksenders. Der drahtlose Empfänger 20, **20**' ist ein Funkempfänger in Form eines Bluetooth-Funkempfängers. Des Weiteren ist das Betriebszustandssignal 11 ein Funksignal in Form eines Bluetooth-Funksignals. Zusätzlich ist das Zuordnungsgerät 50 ein Funkgerät in Form eines Bluetooth-Funkgeräts.

Im Detail weist der Funksender 10, **10**' eine Antenne 15 zum Senden des Betriebszustandssignals 11 auf. Der Funkempfänger **20**, **20**' weist eine Antenne 21 zum Empfangen des Betriebszustandssignals 11 auf. Zusätzlich weist das Zuordnungsgerät 50 eine Antenne 52 zum Senden und/oder zum Empfangen auf.

Jeder drahtlose Sender 10, 10' weist eine, insbesondere individuelle, Senderidentifikation ID1, ID2, ID3, ID4 auf und ist dazu geeignet, die Senderidentifikation ID1, ID2, ID3, ID4 zu senden, insbesondere zusammen mit dem Betriebszustandssignal 11. Beim Zuordnen wird die Senderidentifikation ID1, ID2, ID3, ID4 dem entsprechenden drahtlosen Empfänger 20, 20' mittels des benutzerbetätigbaren, elektrischen Zuordnungsgeräts 50 zugeordnet. Im gezeigten Ausführungsbeispiel ist die jeweilige Senderidentifikation ID1, ID2, ID3, ID4 zusätzlich benutzerlesbar an dem jeweiligen Sender 10, 10' angeordnet.

Jeder drahtlose Empfänger 20, 20' weist eine, insbesondere individuelle, Empfängeridentifikation IDA, IDB auf. Beim Zuordnen wird die Empfängeridentifikation IDA, IDB dem drahtlosen Sender 10, 10' mittels des benutzerbetätigbaren, elektrischen Zuordnungsgeräts 50 zugeordnet. In alternativen Ausführungsbeispielen kann der drahtlose Sender zusätzlich dazu geeignet sein, die Empfängeridentifikation zu senden, insbesondere zusammen mit dem Betriebszustandssignal.

Im gezeigten Ausführungsbeispiel ist die jeweilige Empfängeridentifikation IDA, IDB benutzerlesbar an dem jeweiligen Empfänger 20, 20' angeordnet. Zusätzlich oder alternativ ist der drahtlose Empfänger 20, 20' dazu ausgebildet, insbesondere in einem sogenannten Slave-Modus, seine Empfängeridentifikation IDA, IDB zu senden, insbesondere als Funksignal, insbesondere als Bluetooth-Funksignal.

Das benutzerbetätigbare, elektrische Zuordnungsgerät 50 ist dazu ausgebildet die gesendete/n Senderidentifikation/en ID1, ID2, ID3, ID4 und die gesendete/n Empfängeridentifikation/en IDA, IDB zu empfangen. Die vom Zuordnungsgerät 50 empfangene/n Senderidentifikation/en ID1, ID2, ID3, ID4 und die empfangen/en Empfängeridentifikation/en IDA, IDB werden ausgegeben, insbesondere auf dem Touchscreen 51 angezeigt, insbesondere in einer Liste. Mittels des Zuordnungsgeräts 50 kann der Benutzer die Senderidentifikation/en ID1, ID2, ID3, ID4 der entsprechenden Empfängeridentifikation IDA, IDB zuordnen, insbesondere durch Zusammenschieben auf dem Touchscreen 51 zu einer jeweiligen Gruppe. Infolgedessen sendet das benutzerbetätigbare, elektrische Zuordnungsgerät 50 ein Konfigurationssignal 26.

Im gezeigten Ausführungsbeispiel sollen die drei Sender 10 beziehungsweise ihre Senderidentifikationen ID1, ID2, ID3 dem Empfänger 20 beziehungsweise seiner Empfängeridentifikation IDA zugeordnet werden. Der Sender 10' beziehungsweise seine Senderidentifikation ID4 soll dem Empfänger 20' beziehungsweise seiner Empfängeridentifikation IDB zugeordnet werden. Entsprechend weist das Konfigurationssignal 26 die Empfängeridentifikation IDA und die zuzuordnenden Senderidentifikationen ID1, ID2, ID3 auf. Des Weiteren weist das Konfigurationssignal 26, insbesondere davon getrennt, die Empfängeridentifikation IDB und die zuzuordnende Senderidentifikation ID4 auf.

Das Konfigurationssignal 26 wird von dem/den Empfänger/n 20, 20', insbesondere in dem Slave-Modus, empfangen. Der Empfänger 20 mit der Empfängeridentifikation IDA speichert die empfangenen Senderidentifikationen ID1, ID2, ID3 in einem Speicher 90. Der Empfänger 20' mit der Empfängeridentifikation IDB speichert die empfangene Senderidentifikation ID4 in seinem Speicher 90.

Somit sind die drei Sender 10 beziehungsweise ihre Senderidentifikationen ID1, ID2, ID3 dem Empfänger 20 beziehungsweise seiner Empfängeridentifikation IDA zugeordnet. Der Sender 10' beziehungsweise sein Senderidentifikation ID4 ist dem Empfänger 20' beziehungsweise seiner Empfängeridentifikation IDB zugeordnet.

Wie zuvor beschrieben, kann in alternativen Ausführungsbeispielen der drahtlose Sender dazu geeignet sein, die Empfängeridentifikation zu senden. Das Konfigurationssignal kann von dem/den Sender/n empfangen werden und die Empfängeridentifikation kann gespeichert werden.

Weiter kann in alternativen Ausführungsbeispielen das Zuordnungsgerät dazu ausgebildet sein, die Zuordnung zu speichern. Nicht-erfindungsgemäß braucht das Zuordnungsgerät kein Konfigurationssignal zu senden. Im Betrieb kann der Sender seine Senderidentifikation senden, das Zuordnungsgerät diese empfangen und die zugeordnete Empfängeridentifikation senden.

Wenn der drahtlose Sender 10, 10' und der drahtlose Empfänger 20, 20' zugeordnet sind, ist der Sender 10, 10' dazu ausgebildet, den Betriebszustand des Werkzeugs 30 zu erfassen und in Abhängigkeit von dem erfassten Betriebszustand das Betriebszustandssignal 11 zu senden. Der Empfänger 20, 20', insbesondere in einem Master-Modus, ist dazu ausgebildet, das gesendete Betriebszustandssignal 11 zu empfangen und in Abhängigkeit von dem empfangenen Betriebszustandssignal 11 den Betriebszustand des Geräts 40 zu steuern.

Im Detail ist jeder drahtlose Sender 10, 10' dazu ausgebildet, mit dem Betriebszustandssignal 11 seine Senderidentifikation ID1 oder ID2 oder ID3 oder ID4 zu senden. Jeder Empfänger 20, 20', insbesondere in dem Master-Modus, ist dazu ausgebildet das Betriebszustandssignal 11 mit der Senderidentifikation zu empfangen. Der Empfänger 20, 20' vergleicht die empfangene Senderidentifikationen mit der/den im Speicher 90 gespeicherten Senderidentifikation/en. Wenn die empfangene Senderidentifikation mit einer gespeicherten Senderidentifikation ID1, ID2, ID3 oder ID4 übereinstimmt, steuert der Empfänger 20, 20' in Abhängigkeit des empfangenen Betriebszustandssignals 11 den Betriebszustand des Geräts 40. Bei keiner Übereinstimmung steuert der Empfänger 20, 20' nicht den Betriebszustand. Die individuellen Senderidentifikationen ID1, ID2, ID3, ID4 ermöglichen dem/den Empfänger/n 20, 20' jeweils zwischen einem Betriebszustandssignal 11 von einem zugeordneten Sender 10, 10' und einem Betriebszustandssignal von einem nicht zugeordneten, Sender 10', 10 zu unterscheiden.

Des Weiteren ist der drahtlose Sender 10 getrennt von dem Werkzeug 30 ausgebildet und mit dem Werkzeug 30 koppelbar beziehungsweise im gezeigten Ausführungsbeispiel mit dem Werkzeug 30 gekoppelt, wie in Fig. 1 zu erkennen. Zusätzlich weist der drahtlose Sender 10 eine Energiequelle 14 in Form einer Batterie auf, die insbesondere den Sender 10 mit elektrischer Energie versorgt.

Im Gegensatz dazu ist der drahtlose Sender 10' in das Werkzeug 30 integriert, wie in Fig. 2 unten zu erkennen.

Außerdem ist der drahtlose Empfänger 20 getrennt von dem Gerät 40 ausgebildet und mit dem Gerät 40 koppelbar, wie in Fig. 1 zu erkennen.

Im Gegensatz dazu ist der drahtlose Empfänger 20' in das Gerät 40 integriert, wie in Fig. 2 unten zu erkennen.

Zudem weist das Werkzeug 30 einen Elektromotor 60, wie in Fig. 1 zu erkennen, oder einen Verbrennungsmotor 65 auf, wie in Fig. 2 unten zu erkennen. Der Elektromotor 60 und der Verbrennungsmotor 65 sind jeweils dazu ausgebildet, das Werkzeug 30 anzutreiben.

Der Betriebszustand des Werkzeugs 30 beziehungsweise seines Motors ist ein Einschaltzustand, insbesondere ein Regelungszustand einer regelbaren Drehzahl, oder ein Ausschaltzustand.

Des Weiteren weist der drahtlose Sender 10 einen Sensor 12 auf, insbesondere in Form eines induktiven Sensors. Der Sensor 12 ist dazu ausgebildet, unabhängig davon, ob das Werkzeug 30 mittels des Elektromotors 60 oder des Verbrennungsmotors 65 angetrieben ist, den Betriebszustand des Werkzeug 30 beziehungsweise seines Motors zu erfassen.

Der Betriebszustand des Geräts 40 ist ein Einschaltzustand, insbesondere ein Regelungszustand, oder ein Ausschaltzustand. Insbesondere ist für das Gerät 40 in Form des Saugers der Regelungszustand ein regelbarer Leistungsverbrauch. Für das Gerät 40 in Form des Ventils ist der Regelungszustand eine regelbare Durchflussrate, insbesondere von Wasser aus einem Wasseranschluss 110.

Außerdem ist der drahtlose Empfänger 20 ein Adapter. Der Adapter ist zum Anordnen zwischen dem Gerät 40 und einer Versorgungseinrichtung 70 für das Gerät 40 ausgebildet. Weiter ist der Empfänger 20 dazu ausgebildet, eine Versorgungszufuhr von der Versorgungseinrichtung 70 zum Steuern des Betriebszustands des Geräts 40 zu steuern.

Im gezeigten Ausführungsbeispiel ist die Versorgungseinrichtung 70 eine elektrische Energiequelle in Form einer Steckdose. Der Empfänger 20 weist einen Netzstecker 105 zum Einstecken in eine Steckdosenbuchse 107 der Versorgungseinrichtung 70 auf. Wenn der Netzstecker 105 in die Steckdosenbuchse 107 eingesteckt ist, ist der Empfänger 20 von der Versorgungseinrichtung 70 mit elektrischer Energie versorgt. In alternativen Ausführungsbeispielen kann der Empfänger eine Energiequelle, insbesondere eine Batterie, aufweisen, die den Empfänger mit elektrischer Energie versorgen kann. Im gezeigten Ausführungsbeispiel weist der Empfänger 20 eine Steckdosenbuchse 100 auf, in die ein Netzstecker 106 des Geräts 40 eingesteckt sein oder werden kann.

Weiter im gezeigten Ausführungsbeispiel sendet der drahtlose Sender 10, 10' in regelmäßigen Intervallen, wie einer Sekunde, folgendes Betriebszustandssignal 11: die Senderidentifikation ID1 oder ID2 oder ID3 oder ID4 und eine Betriebslaufzeit, insbesondere in Sekunden, des entsprechenden Werkzeugs 30. Wenn das Werkzeug 30 in seinem Einschaltzustand ist, erhöht der Sender 10, 10', insbesondere automatisch, entsprechend die erfasste Betriebslaufzeit des Werkzeugs 30. Im Ausschaltzustand bleibt die Betriebslaufzeit unverändert. Der drahtlose Empfänger 20, 20' empfängt das Betriebszustandssignal 11. Wenn sich für die zugeordnete Senderidentifikation die Betriebslaufzeit erhöht hat, steuert der Empfänger 20 das Gerät 40 in seinen Einschaltzustand. Bei unveränderter Betriebslaufzeit bleibt oder wird das Gerät 40 ausgeschaltet. Wenn der drahtlose Empfänger 20, 20' kein Betriebszustandssignal empfängt, wie bei einem Sender außer Reichweite, bleibt oder wird das Gerät 40 ausgeschaltet.

In alternativen Ausführungsbeispielen kann das Betriebszustandssignal den Einschaltzustand, insbesondere den Regelungszustand, oder den Ausschaltzustand des Werkzeugs aufweisen. Weiter kann in alternativen Ausführungsbeispielen der drahtlose Sender dazu ausgebildet sein, beim Einschaltzustand des Werkzeugs das Betriebszustandssignal, insbesondere nur seine Senderidentifikation, zu senden und beim Ausschaltzustand kein Betriebszustandssignal zu senden.

Wie die gezeigten und oben erläuterten Ausführungsbeispiele deutlich machen, stellt die Erfindung ein vorteilhaftes Verfahren zum Betreiben eines drahtlosen Senders und eines drahtlosen Empfängers und ein vorteilhaftes System bereit, das jeweils verbesserte Eigenschaften aufweist, insbesondere kostengünstig und benutzerfreundlich ist.

## Patentansprüche

1. Verfahren zum Betreiben eines drahtlosen Senders (10, 10') und eines drahtlosen Empfängers (20, 20'),
- wobei der drahtlose Sender (10, 10') einem Werkzeug (30) zugeordnet ist und dazu geeignet ist, einen Betriebszustand des Werkzeugs (30) zu erfassen und in Abhängigkeit von dem erfassten Betriebszustand ein Betriebszustandssignal (11) zu senden,
- wobei der drahtlose Empfänger (20, 20') einem Gerät (40) zugeordnet ist und dazu geeignet ist, das gesendete Betriebszustandssignal (11) zu empfangen und in Abhängigkeit von dem empfangenen Betriebszustandssignal (11) einen Betriebszustand des Geräts (40) zu steuern,
wobei das Verfahren den Schritt aufweist:
- Zuordnen des drahtlosen Senders (10, 10') und des drahtlosen Empfängers (20, 20') mittels eines benutzerbetätigbaren, elektrischen Zuordnungsgeräts (50) derart, dass der Empfänger (20, 20') in Abhängigkeit von dem empfangenen Betriebszustandssignal (11) den Betriebszustand des Geräts (40) steuert, wobei das Zuordnungsgerät (50) getrennt von dem Sender (10, 10') und dem Empfänger (20, 20') ausgebildet ist,
wobei
- der drahtlose Sender (10, 10') eine Senderidentifikation (ID1, ID2, ID3, ID4) aufweist und die Senderidentifikation (ID1, ID2, ID3, ID4) sendet, und beim Zuordnen die Senderidentifikation (ID1, ID2, ID3, ID4) dem drahtlosen Empfänger (20, 20') mittels des benutzerbetätigbaren, elektrischen Zuordnungsgeräts (50) zugeordnet wird, und/oder dass der drahtlose Empfänger (20, 20') eine Empfängeridentifikation (IDA, IDB) aufweist und der drahtlose Sender (10, 10') die Empfängeridentifikation (IDA, IDB) sendet, und beim Zuordnen die Empfängeridentifikation (IDA, IDB) dem drahtlosen Sender (10, 10') mittels des benutzerbetätigbaren, elektrischen Zuordnungsgeräts (50) zugeordnet wird,
- **dadurch gekennzeichnet,**
**dass** das benutzerbetätigbare, elektrische Zuordnungsgerät (50) die gesendete/n Senderidentifikation/en (ID1, ID2, ID3, ID4) und die gesendete/n Empfängeridentifikation/en (IDA, IDB) empfängt,
- **dass** mittels des Zuordnungsgeräts (50) ein Benutzer die Senderidentifikation/en (ID1, ID2, ID3, ID4) der entsprechenden Empfängeridentifikation (IDA, IDB) zuordnet, und
- **dass** infolgedessen das benutzerbetätigbare, elektrische Zuordnungsgerät (50) ein Konfigurationssignal (26) sendet.

2. Verfahren nach Anspruch 1,
- wobei das benutzerbetätigbare, elektrische Zuordnungsgerät (50) eine Smartwatch oder ein Smartphone oder ein Tablet oder ein Laptop oder ein Computer ist.

3. Verfahren nach einem der vorhergehenden Ansprüche,
- wobei das benutzerbetätigbare, elektrische Zuordnungsgerät (50) ein drahtloses Zuordnungsgerät ist und den drahtlosen Sender (10, 10') und den drahtlosen Empfänger (20, 20') drahtlos zuordnet.

4. Verfahren nach einem der vorhergehenden Ansprüche,
- wobei der Betriebszustand des Werkzeugs (30) ein Einschaltzustand, insbesondere ein Regelungszustand, oder ein Ausschaltzustand ist und/oder
- wobei der Betriebszustand des Geräts (40) ein Einschaltzustand, insbesondere ein Regelungszustand, oder ein Ausschaltzustand ist.

5. Verfahren nach einem der vorhergehenden Ansprüche,
- wobei das Werkzeug (30) eine Schleifmaschine oder ein Trennschleifer oder ein Winkelschleifer oder eine Säge oder eine Kreissäge oder eine Stichsäge oder ein Hoch-Entaster oder eine Heckenschere oder ein Heckenschneider oder ein Blasgerät oder ein Laubbläser oder ein Rasenmäher oder ein Freischneider oder ein Kehrgerät oder eine Kehrwalze oder eine Kehrbürste oder eine Bohrmaschine oder eine Schlagbohrmaschine oder eine Fräsmaschine oder eine Hobelmaschine oder eine Poliermaschine ist.

6. Verfahren nach einem der vorhergehenden Ansprüche,
- wobei das Gerät (40) ein Sauger und/oder eine Schmiermittel- und/oder Kühlmittelfördereinrichtung und/oder eine Mediumfördereinrichtung und/oder ein Ventil ist.

7. System (1), aufweisend:
- einen drahtlosen Sender (10, 10'), der dazu geeignet ist, einem Werkzeug (30) zugeordnet zu sein und einen Betriebszustand des Werkzeugs (30) zu erfassen und in Abhängigkeit von dem erfassten Betriebszustand ein Betriebszustandssignal (11) zu senden, und
- einen drahtlosen Empfänger (20, 20'), der dazu geeignet ist, einem Gerät (40) zugeordnet zu sein und das gesendete Betriebszustandssignal (11) zu empfangen und in Abhängigkeit von dem empfangenen Betriebszustandssignal (11) einen Betriebszustand des Geräts (40) zu steuern, und
- ein benutzerbetätigbares Zuordnungsgerät (50),
- wobei der drahtlose Sender (10, 10') und der drahtlose Empfänger (20, 20') dazu ausgebildet sind, mittels des benutzerbetätigbaren, elektrischen Zuordnungsgeräts (50) derart zugeordnet zu sein, dass der Empfänger (20, 20') in Abhängigkeit von dem empfangenen Betriebszustandssignal (11) den Betriebszustand des Geräts (40) steuert, wobei das Zuordnungsgerät (50) getrennt von dem Sender (10, 10') und dem Empfänger (20, 20') ausgebildet ist,
wobei
- der drahtlose Sender (10, 10') eine Senderidentifikation (ID1, ID2, ID3, ID4) aufweist und dazu geeignet ist, die Senderidentifikation (ID1, ID2, ID3, ID4) zu senden, und beim Zuordnen die Senderidentifikation (ID1, ID2, ID3, ID4) dem drahtlosen Empfänger (20, 20') mittels des benutzerbetätigbaren, elektrischen Zuordnungsgeräts (50) zugeordnet wird, und/oder dass der drahtlose Empfänger (20, 20') eine Empfängeridentifikation (IDA, IDB) aufweist und der drahtlose Sender (10, 10') dazu geeignet ist, die Empfängeridentifikation (IDA, IDB) zu senden, und beim Zuordnen die Empfängeridentifikation (IDA, IDB) dem drahtlosen Sender (10, 10') mittels des benutzerbetätigbaren, elektrischen Zuordnungsgeräts (50) zugeordnet wird,
- **dadurch gekennzeichnet,**
**dass** das benutzerbetätigbare, elektrische Zuordnungsgerät (50) dazu ausgebildet ist, die gesendete/n Senderidentifikation/en (ID1, ID2, ID3, ID4) und die gesendete/n Empfängeridentifikation/en (IDA, IDB) zu empfangen,
- **dass** das Zuordnungsgerät dazu ausgebildet ist, dass mittels des Zuordnungsgeräts (50) ein Benutzer die Senderidentifikation/en (ID1 ID2, ID3, ID4) der entsprechenden Empfängeridentifikation (IDA, IDB) zuordnen kann,
- **dass** das benutzerbetätigbare, elektrische Zuordnungsgerät (50) dazu ausgebildet ist infolgedessen ein Konfigurationssignal (26) zu senden.

8. System (1) nach Anspruch 7,
- wobei der drahtlose Sender (10, 10') ein Funksender ist und der drahtlose Empfänger (20, 20') ein Funkempfänger ist.

9. System (1) nach Anspruch 7 oder 8,
- wobei der drahtlose Sender (10) getrennt von dem Werkzeug (30) ausgebildet ist und mit dem Werkzeug (30) koppelbar ist, und/oder
- wobei der drahtlose Empfänger (20) getrennt von dem Gerät (40) ausgebildet ist und mit dem Gerät (40) koppelbar ist.

10. System (1) nach einem der Ansprüche 7 bis 9,
- wobei der drahtlose Sender (10) einen Sensor (12) aufweist, der dazu ausgebildet ist, unabhängig davon, ob das Werkzeug (30) mittels eines Elektromotors (60) oder eines Verbrennungsmotors (65) angetrieben ist, den Betriebszustand des Werkzeugs (30) zu erfassen.

11. System (1) nach einem der Ansprüche 7 bis 10,
- wobei der Sender (10) einen Sensor (12) in Form eines akustischen Sensors oder in Form eines induktiven Sensors oder in Form eines Vibrationssensors oder in Form eines Beschleunigungssensors zum Erfassen des Betriebszustands des Werkzeugs (30) aufweist.

12. System (1) nach einem der Ansprüche 7 bis 11,
- wobei der drahtlose Empfänger (20) ein Adapter ist, der zum Anordnen zwischen dem Gerät (40) und einer Versorgungseinrichtung (70) für das Gerät (40) und dazu ausgebildet ist, eine Versorgungszufuhr von der Versorgungseinrichtung (70) zum Steuern des Betriebszustands des Geräts (40) zu steuern.

13. System (1) nach einem der Ansprüche 7 bis 12, wobei das System (1) aufweist:
- das Werkzeug (30) und/oder das Gerät (40).

## Claims

1. Method for operating a wireless transmitter (10, 10') and a wireless receiver (20, 20'),
- wherein the wireless transmitter (10, 10') is assigned to a tool (30) and is adapted to detect an operation condition of the tool (30) and to send an operation condition signal (11) as a function of the detected operation condition,
- wherein the wireless receiver (20, 20') is assigned to an apparatus (40) and is adapted to receive the sent operation condition signal (11) and to control an operation condition of the apparatus (40) as a function of the received operation condition signal (11),
the method comprising the step:
- assigning the wireless transmitter (10, 10') and the wireless receiver (20, 20') by means of a user-operated, electric assignment apparatus (50) such that the receiver (20, 20') controls the operation condition of the apparatus (40) as a function of the received operation condition signal (11), wherein the assignment apparatus (50) is separate from the transmitter (10, 10') and the receiver (20, 20'), wherein
- the wireless transmitter (10, 10') has a transmitter identification (ID1, ID2, ID3, ID4) and sends the transmitter identification (ID1, ID2, ID3, ID4), and during the assignment procedure the transmitter identification (ID1, ID2, ID3, ID4) is assigned to the wireless receiver (20, 20') by means of the user-operated, electric assignment apparatus (50), and/or that the wireless receiver (20, 20') has a receiver identification (IDA, IDB), and the wireless transmitter (10, 10') sends the receiver identification (IDA, IDB), and during the assignment procedure the receiver identification (IDA, IDB) is assigned to the wireless transmitter (10, 10') by means of the user-operated, electric assignment apparatus (50),
**characterized in that**
- the user-operated, electric assignment apparatus (50) receives the sent transmitter identification(s) (ID1, ID2, ID3, ID4) and the sent receiver identification(s) (IDA, IDB),
- a user assigns the transmitter identification(s) (ID1, ID2, ID3, ID4) to the corresponding receiver identification (IDA, IDB) using the assignment apparatus (50), and
- consequently, the user-operated, electric assignment apparatus (50) sends a configuration signal (26).

2. Method according to claim 1,
- wherein the user-operated, electric assignment apparatus (50) is a smartwatch or a smartphone or a tablet or a laptop or a computer device.

3. Method according to any of the preceding claims,
- wherein the user-operated, electric assignment apparatus (50) is a wireless assignment apparatus and assigns the wireless transmitter (10, 10') and the wireless receiver (20, 20') in a wireless manner.

4. Method according to any of the preceding claims,
- wherein the operation condition of the tool (30) is an on-condition, in particular a control condition, or an off-condition, and/or
- wherein the operation condition of the apparatus (40) is an on-condition, in particular a control condition, or an off-condition.

5. Method according to any of the preceding claims,
- wherein the tool (30) is a grinding machine or a cutoff grinder or an angular grinder or a saw or a circular saw or a jigsaw or a pole pruner or hedge shears or a hedge cutter or a blower device or a leaf blower or a lawn mower or a brush cutter or a sweeper device or a sweeper roller or a sweeper brush or a drilling machine or a percussion drilling machine or a milling machine or a planing machine or a polishing machine.

6. Method according to any of the preceding claims,
- wherein the apparatus (40) is a suction device and/or a supply device for lubricant and/or a supply device for coolant and/or a supply device for medium and/or a valve.

7. System (1), comprising:
- a wireless transmitter (10, 10') which is adapted to be assigned to a tool (30) and to detect an operation condition of the tool (30) and to send an operation condition signal (11) as a function of the detected operation condition, and
- a wireless receiver (20, 20') which is adapted to be assigned to an apparatus (40) and to receive the sent operation condition signal (11) and to control an operation condition of the apparatus (40) as a function of the received operation condition signal (11), and
- a user-operated assignment apparatus (50),
- wherein the wireless transmitter (10, 10') and the wireless receiver (20, 20') are configured to be assigned by means of the user-operated, electric assignment apparatus (50) such that the receiver (20, 20') controls the operation condition of the apparatus (40) as a function of the received operation condition signal (11), wherein the assignment apparatus (50) is separate from the transmitter (10, 10') and the receiver (20, 20'),
- wherein the wireless transmitter (10, 10') has a transmitter identification (ID1, ID2, ID3, ID4) and is adapted to send the transmitter identification (ID1, ID2, ID3, ID4), and during the assignment procedure the transmitter identification (ID1, ID2, ID3, ID4) is assigned to the wireless receiver (20, 20') by means of the user-operated, electric assignment apparatus (50), and/or that the wireless receiver (20, 20') has a receiver identification (IDA, IDB), and the wireless transmitter (10, 10') is adapted to send the receiver identification (IDA, IDB), and during the assignment procedure the receiver identification (IDA, IDB) is assigned to the wireless transmitter (10, 10') by means of the user-operated, electric assignment apparatus (50),
**characterized in that**
- the user-operated, electric assignment apparatus (50) is configured to receive the sent transmitter identification(s) (ID1, ID2, ID3, ID4) and the sent receiver identification(s) (IDA, IDB),
- the assignment apparatus is configured such that, using the assignment apparatus (50), a user can assign the transmitter identification(s) (ID1, ID2, ID3, ID4) to the corresponding receiver identification (IDA, IDB),
- the user-operated, electric assignment apparatus (50) is configured to, consequently, send a configuration signal (26).

8. System (1) according to claim 7,
- wherein the wireless transmitter (10, 10') is a radio transmitter and the wireless receiver (20, 20') is a radio receiver.

9. System (1) according to claim 7 or 8,
- wherein the wireless transmitter (10) is separate from the tool (30) and designed to be coupled to the tool (30), and/or
- wherein the wireless receiver (20) is separate from the apparatus (40) and designed to be coupled to the apparatus (40).

10. System (1) according to any of claims 7 to 9,
- wherein the wireless transmitter (10) includes a sensor (12) which is configured to detect the operation condition of the tool (30) irrespective of whether the tool (30) is driven by means of an electric motor (60) or by means of a combustion engine (65).

11. System (1) according to any of claims 7 to 10,
- wherein the transmitter (10) includes a sensor (12) in the form of an acoustic sensor or in the form of an inductive sensor or in the form of a vibration sensor or in the form of an acceleration sensor for detecting the operation condition of the tool (30).

12. System (1) according to any of claims 7 to 11,
- wherein the wireless receiver (20) is an adaptor which is configured for arrangement between the apparatus (40) and a supply feeding unit (70) for the apparatus (40) and is configured to control feeding supply from the supply feeding unit (70) for controlling the operation condition of the apparatus (40).

13. System (1) according to any of claims 7 to 12, the system (1) comprising:
- the tool (30) and/or the apparatus (40).

## Revendications

1. Procédé pour faire fonctionner un émetteur sans fil (10, 10') et un récepteur sans fil (20, 20'),
- l'émetteur sans fil (10, 10') étant associé à un outil (30) et étant adapté pour détecter un état opérationnel de l'outil (30) et émettre un signal d'état opérationnel (11) en fonction de l'état opérationnel détecté,
- le récepteur sans fil (20, 20') étant associé à un appareil (40) et étant adapté pour recevoir le signal d'état opérationnel (11) émis et commander un état opérationnel de l'appareil (40) en fonction du signal d'état opérationnel (11) reçu,
le procédé comprenant l'étape suivante :
- association de l'émetteur sans fil (10, 10') et du récepteur sans fil (20, 20') au moyen d'un appareil d'association (50) électrique pouvant être actionné par l'utilisateur de telle sorte que le récepteur (20, 20') commande l'état opérationnel de l'appareil (40) en fonction du signal d'état opérationnel (11) reçu, l'appareil d'association (50) étant configuré séparément de l'émetteur (10, 10') et du récepteur (20, 20'),
- l'émetteur sans fil (10, 10') possédant une identification d'émetteur (ID1, ID2, ID3, ID4) et émettant l'identification d'émetteur (ID1, ID2, ID3, ID4) et, lors de l'association, l'identification d'émetteur (ID1, ID2, ID3, ID4) étant associée au récepteur sans fil (20, 20') au moyen de l'appareil d'association (50) électrique pouvant être actionné par l'utilisateur, et/ou le récepteur sans fil (20, 20') possédant une identification de récepteur (IDA, IDB) et l'émetteur sans fil (10, 10') émettant l'identification de récepteur (IDA, IDB) et, lors de l'association, l'identification de récepteur (IDA, IDB) étant associée à l'émetteur sans fil (10, 10') au moyen de l'appareil d'association (50) électrique pouvant être actionné par l'utilisateur,
- **caractérisé en ce que** l'appareil d'association (50) électrique pouvant être actionné par l'utilisateur reçoit la ou les identifications d'émetteur (ID1, ID2, ID3, ID4) émises et la ou les identifications de récepteur (IDA, IDB) émises,
- **en ce qu'**un utilisateur associe la ou les identifications d'émetteur (ID1, ID2, ID3, ID4) à l'identification de récepteur (IDA, IDB) correspondante au moyen de l'appareil d'association (50), et
- **en ce que** suite à cela, l'appareil d'association (50) électrique pouvant être actionné par l'utilisateur émet un signal de configuration (26).

2. Procédé selon la revendication 1,
- l'appareil d'association (50) électrique pouvant être actionné par l'utilisateur étant une montre connectée ou un smartphone ou une tablette ou un ordinateur portable ou un ordinateur.

3. Procédé selon l'une des revendications précédentes,
- l'appareil d'association (50) électrique pouvant être actionné par l'utilisateur étant un appareil d'association sans fil et associant sans fil l'émetteur sans fil (10, 10') et le récepteur sans fil (20, 20').

4. Procédé selon l'une des revendications précédentes,
- l'état opérationnel de l'outil (30) étant un état de mise en marche, notamment un état de régulation, ou un état d'arrêt et/ou
- l'état opérationnel de l'appareil (40) étant un état de mise en marche, notamment un état de régulation, ou un état d'arrêt.

5. Procédé selon l'une des revendications précédentes,
- l'outil (30) étant une rectifieuse ou une tronçonneuse ou une meuleuse d'angle ou une scie ou une scie circulaire ou une scie sauteuse ou une perche d'élagage ou un taille-haie ou une cisaille à haie ou une souffleuse ou un souffleur à feuilles ou une tondeuse à gazon ou une débroussailleuse ou une balayeuse ou un cylindre balayeur ou une brosse de balayage ou une perceuse ou une perceuse à percussion ou une fraiseuse ou une raboteuse ou une polisseuse.

6. Procédé selon l'une des revendications précédentes,
- l'appareil (40) étant un aspirateur et/ou un dispositif de transport de lubrifiant et/ou de réfrigérant et/ou un dispositif de transport de fluide et/ou une vanne.

7. Système (1), comprenant :
- un émetteur sans fil (10, 10'), qui est adapté pour être associé à un outil (30) et pour détecter un état opérationnel de l'outil (30) et émettre un signal d'état opérationnel (11) en fonction de l'état opérationnel détecté, et
- un récepteur sans fil (20, 20'), qui est adapté pour être associé à un appareil (40) et pour recevoir le signal d'état opérationnel (11) émis et commander un état opérationnel de l'appareil (40) en fonction du signal d'état opérationnel (11) reçu, et
- un appareil d'association (50) pouvant être actionné par l'utilisateur,
- l'émetteur sans fil (10, 10') et le récepteur sans fil (20, 20') étant configurés pour être associés au moyen de l'appareil d'association (50) électrique pouvant être actionné par l'utilisateur de telle sorte que le récepteur (20, 20') commande l'état opérationnel de l'appareil (40) en fonction du signal d'état opérationnel (11) reçu, l'appareil d'association (50) étant configuré séparément de l'émetteur (10, 10') et du récepteur (20, 20'),
- l'émetteur sans fil (10, 10') possédant une identification d'émetteur (ID1, ID2, ID3, ID4) et étant adapté pour émettre l'identification d'émetteur (ID1, ID2, ID3, ID4) et, lors de l'association, l'identification d'émetteur (ID1, ID2, ID3, ID4) étant associée au récepteur sans fil (20, 20') au moyen de l'appareil d'association (50) électrique pouvant être actionné par l'utilisateur, et/ou le récepteur sans fil (20, 20') possédant une identification de récepteur (IDA, IDB) et l'émetteur sans fil (10, 10') étant adapté pour émettre l'identification de récepteur (IDA, IDB) et, lors de l'association, l'identification de récepteur (IDA, IDB) étant associée à l'émetteur sans fil (10, 10') au moyen de l'appareil d'association (50) électrique pouvant être actionné par l'utilisateur,
- **caractérisé en ce que** l'appareil d'association (50) électrique pouvant être actionné par l'utilisateur est configuré pour recevoir la ou les identifications d'émetteur (ID1, ID2, ID3, ID4) émises et la ou les identifications de récepteur (IDA, IDB) émises,
- **en ce que** l'appareil d'association est configuré pour qu'un utilisateur peut associer la ou les identifications d'émetteur (ID1, ID2, ID3, ID4) à l'identification de récepteur (IDA, IDB) correspondante au moyen de l'appareil d'association (50),
- **en ce que** l'appareil d'association (50) électrique pouvant être actionné par l'utilisateur est configuré pour, suite à cela, émettre un signal de configuration (26) .

8. Système (1) selon la revendication 7,
- l'émetteur sans fil (10, 10') étant un émetteur radioélectrique et le récepteur sans fil (20, 20') étant un récepteur radioélectrique.

9. Système (1) selon la revendication 7 ou 8,
- l'émetteur sans fil (10) étant configuré séparément de l'outil (30) et pouvant être couplé à l'outil (30) et/ou
- le récepteur sans fil (20) étant configuré séparément de l'appareil (40) et pouvant être couplé à l'appareil (40).

10. Système (1) selon l'une des revendications 7 à 9,
- l'émetteur sans fil (10) possédant un capteur (12) qui est configuré pour détecter l'état opérationnel de l'outil (30) independamment du fait que l'outil (30) est entraîné au moyen d'un moteur électrique (60) ou d'un moteur à combustion interne (65).

11. Système (1) selon l'une des revendications 7 à 10,
- l'émetteur (10) possédant un capteur (12) sous la forme d'un capteur acoustique ou sous la forme d'un capteur inductif ou sous la forme d'un capteur de vibrations ou sous la forme d'un capteur d'accélération pour détecter l'état opérationnel de l'outil (30).

12. Système (1) selon l'une des revendications 7 à 11,
- le récepteur sans fil (20) étant un adaptateur qui est configuré pour être disposé entre l'appareil (40) et un dispositif d'alimentation (70) pour l'appareil (40) et pour commander une arrivée d'alimentation depuis le dispositif d'alimentation (70) en vue de commander l'état opérationnel de l'appareil (40).

13. Système (1) selon l'une des revendications 7 à 12, le système (1) comprenant :
- l'outil (30) et/ou l'appareil (40).
